Europäisches Patentamt

European Patent Office

Office européen des brevets

(11) Veröffentlichungsnummer: **0 185 205**
**B1**

(12) **EUROPÄISCHE PATENTSCHRIFT**

(45) Veröffentlichungstag der Patentschrift:
21.03.90

(51) Int. Cl.⁴: **C08G 12/38**, C08L 61/30,
C08J 5/24, C09J 161/30

(21) Anmeldenummer: 85114585.4

(22) Anmeldetag: 16.11.85

(54) Verfahren zur Herstellung von Harnstoff-Melamin-Formaldehyd-Kondensationsprodukten.

(30) Priorität: 22.11.84 DE 3442454

(43) Veröffentlichungstag der Anmeldung:
25.06.86 Patentblatt 86/26

(45) Bekanntmachung des Hinweises auf die Patenterteilung:
21.03.90 Patentblatt 90/12

(84) Benannte Vertragsstaaten:
AT BE DE FR IT NL

(56) Entgegenhaltungen:
FR-A- 1 102 968
FR-A- 2 504 542
GB-A- 703 426
US-A- 3 793 280

Houben-Weyl: Methoden der organischen Chemie,
Band XIV/2 (1963), p. 335

(73) Patentinhaber: BASF Aktiengesellschaft,
Carl-Bosch-Strasse 38, D-6700 Ludwigshafen(DE)

(72) Erfinder: Etling, Hans, Dr., Pommernstrasse 12,
D-6701 Dannstadt-Schauernheim(DE)
Erfinder: Diem, Hans, Dr., Knieblsstrasse 16,
D-6800 Mannheim 1(DE)
Erfinder: Eisele, Wolfgang, Dr., Niedererdstrasse 103,
D-6700 Ludwigshafen(DE)
Erfinder: Siegler, Manfred, Udastrasse 4,
D-6710 Frankenthal(DE)

## Beschreibung

Die vorliegende Erfindung betrifft ein Verfahren zur Herstellung von wäßrigen Lösungen von Harnstoff-Melamin-Formaldehyd-Kondensationsprodukten in einer Stufe und die Verwendung dieser Produkte als Leim- und Tränkharze, zur Imprägnierung von Zellstoffen oder von anderen Füllmitteln für die Preßmassenherstellung sowie als Bindemittel für die Herstellung von Matten und Vliesen aus Steinwolle und Glasfasern.

Üblicherweise werden Harnstoff-Melamin-Formaldehyd-Kondensationsprodukte gewonnen durch jeweils getrennte Herstellung von Harnstoff-Formaldehyd- und Melamin-Formaldehyd-Kondensaten und deren nachträgliche Vermischung (FR-A-1319269, DE-A-2422650, DE-A 2422803, EP-A-52212).

Auch zweistufige Herstellungsprozesse sind bekannt. Nach dem Vorschlag der US-A-4123579 wird dabei zunächst ein Melamin-Formaldehyd-Kondensat bereitet, das dann in einer Folgestufe mit Harnstoff in ein Harnstoff-Melamin-Formaldehyd-Kondensat übergeführt wird.

In der DE-A-2455420 wird beschrieben, durch Reaktion von Harnstoff und Formaldehyd im schwach sauren Milieu ein Harnstoff-Formaldehyd-Vorkondensat herzustellen, das anschließend in einer zweiten Stufe in basischem Milieu mit Melamin zu einem Harnstoff-Melamin-Formaldehyd-Harz umgesetzt wird. Gemäß den Beispielen 3 und 4 können bei der Herstellung des Vorkondensats der Formaldehyd und ein Teil des Harnstoffs auch in Form einer konzentrierten wäßrigen Lösung von Formaldehyd und Harnstoff zugesetzt werden.

Nach der Lehre der US-A-3891590 soll durch Umsetzung von Harnstoff, Melamin und Formaldehyd, wobei dazu auch konzentrierte wäßrige Lösungen von Formaldehyd und Harnstoff verwendet werden können, eine stabilisierte Harnstoff-Melamin-Formaldehyd-Komponente hergestellt werden. Als Stabilisatoren dienen dabei Ammoniumsalze anorganischer und organischer Säuren. Diese Komponente wird dann in einer weiteren Stufe mit wäßriger Harnstofflösung, die einen sauer reagierenden Katalysator enthält, zum Harz umgesetzt.

Die beschriebenen Verfahren sind sehr aufwendig. Zudem können mit dem zuletzt genannten Verfahren nur solche Harze hergestellt werden, deren Melamingehalt maximal 6 Gew.%, bezogen auf die fertige Harzlösung, beträgt. Harnstoff-Melamin-Formaldehyd-Harze, die einen solchen, niederen Melamingehalt aufweisen, sind ungeeignet für wetterfeste Verleimungen; d.h. Spanplatten, die mittels dieser Harze verleimt werden, sind nicht ausreichend beständig gegen hohe Luftfeuchtigkeit und Nässe. Auch als Tränkharze, insbesondere für Beschichtungen, d.h. für die Herstellung von Endflächen ohne Nachlackierung sind diese Harze ungeeignet.

In der FR-A 2 504 542 wird ein Verfahren zur Herstellung von Klebstoff durch Mischen eines Harnstoff-Formaldehyd-Kondensates mit einem Melamin-Formaldehyd-Harz beschrieben. Im Vergleichsbeispiel 1 wird ein einstufiges Verfahren zur Herstellung von Harnstoff-Melamin-Formaldehyd-Harzen beschrieben, wobei ein Teil der Kondensation im alkalischen, der zweite Teil im sauren Bereich durchgeführt wird. Zur Aufkonzentration der Lösung erfolgt ein Destillationsschritt.

Diese Lösungen weisen keine ausreichende Lagerstabilität auf.

Aus der FR-A 1 102 968 sind Harnstoff-Melamin-Formaldehyd-Harze bekannt, deren Methylolgruppen teilweise mit Methanol verethert sind. Der Formaldehyd wird als Paraformaldehyd in das Reaktionsgemisch eingebracht.

Aufgabe der vorliegenden Erfindung war es nun, ein Verfahren bereitzustellen, das es ermöglicht, wäßrige Lösungen von Harnstoff-Melamin-Formaldehyd-Kondensationsprodukten in einfacher Weise, möglichst unter Vermeidung aufwendiger Verfahrensschritte oder Mischprozesse, herzustellen, wobei die resultierenden Harzlösungen eine gute Lagerstabilität aufweisen und außerdem bei ihrer Anwendung sowohl wetterfeste und kochfeste Verleimungen wie auch Endprodukte mit äußerst geringer Formaldehydemission ergeben sollten. Zudem sollten die Harzlösungen von vornherein einen hohen Feststoffgehalt besitzen.

Es wurde gefunden, daß die Herstellung von wäßrigen Lösungen von Harnstoff-Melamin-Formaldehyd-Kondensationsprodukten durch Kondensation von Harnstoff, Melamin und Formaldehyd, gegebenenfalls unter Zusatz von Modifizierungsmitteln, vorteilhaft gelingt, wenn man die Kondensation unter schwach basischen Bedingungen in einer Stufe vornimmt und dabei die erforderliche Menge an Formaldehyd entweder teilweise oder vollständig in Form einer konzentrierten wäßrigen Lösung von Formaldehyd und Harnstoff in die Reaktion einbringt.

Die genannten konzentrierten wäßrigen Lösungen von Formaldehyd und Harnstoff sind an sich bekannt. Es handelt sich dabei um Lösungen, wie sie bei der oxidierenden Dehydrierung von Methanol erhalten werden können. Beispielsweise ist in der DE-B-2451990 die Herstellung solcher wäßriger Lösungen beschrieben.

Im allgemeinen weisen diese Lösungen einen Gehalt an Formaldehyd von 30 bis 60 Gew.% und einen Gehalt an Harnstoff von 20 bis 30 Gew.%, jeweils bezogen auf die Lösung, auf. Vorzugsweise verwendet man eine Lösung, die etwa 50 Gew.% Formaldehyd und etwa 25 Gew.% Harnstoff, jeweils bezogen auf die Lösung, enthält.

Erfindungsgemäß soll die zur Herstellung der Kondensationsprodukte erforderliche Menge an Formaldehyd entweder teilweise oder vollständig in Form der genannten Formaldehyd-Harnstoff-Lösungen in die Reaktion eingebracht werden.

Wird der benötigte Formaldehyd nur teilweise in Form der konzentrierten Lösung eingebracht, so soll diese Lösung mindestens 50 Gew.%, vorzugsweise 80 Gew.%, der bei der Kondensation benötigten Formaldehydmenge liefern. In einer besonders bevorzugten Ausführungsform wird die benötigte Formaldehydmenge vollständig in Form einer konzentrierten wäßrigen Lösung von Formaldehyd und Harnstoff in die Kondensationsreaktion eingebracht.

Gegebenenfalls kann das erfindungsgemäße Verfahren in Gegenwart von Modifizierungsmitteln durchgeführt werden. Modifizierungsmittel werden verwendet, um bestimmte Eingenschaften der Kondensationsprodukte bzw. ihrer Endprodukte zu verbessern, beispielsweise Quellfestigkeit, Lagerbarkeit, Elastizität, Fluß oder Verdünnbarkeit. Solche Modifizierungsmittel, deren Verwendung an sich bekannt ist, sind beispielsweise Phenol, Toluolsulfonsäureamide, N,N-Dimethylformamid, ε-Caprolactam, Alkohole, Glykole, Glykolether, Saccharose oder Amine. Ihr Anteil beträgt im allgemeinen bis zu 10 Gew.%, bezogen auf die wäßrige Lösung der resultierenden Kondensationsprodukte.

Das Molverhältnis von Formaldehyd:Summe aus Harnstoff und Melamin ist über einen größeren Bereich hinwig variabel und beträgt üblicherweise 1,0:1 bis 2,5:1. Bevorzugt wird ein Molverhältnis von 1,1:1 bis 1,5:1.

Der Anteil des Melamins im Reaktionsgemisch richtet sich im wesentlichen nach den jeweils gewünschten Eigenschaften des Reaktionsprodukts und liegt in der Regel bei 5 bis 40 Gew.%, vorzugsweise 20 bis 25 Gew.%, jeweils bezogen auf die wäßrige Lösung des Harnstoff-Melamin-Formaldehyd-Kondensationsprodukts.

Die durch das genannte Molverhältnis ausgedrückte Menge an Harnstoff schließt auch einen gewissen Anteil ungebundenen Harnstoff mit ein, der in der resultierenden wäßrigen Lösung des Harnstoff-Melamin-Formaldehyd-Kondensationsprodukts noch vorhanden sein kann. Dieser ungebundene Harnstoff kann bei der Aushärtung des Harzes als Formaldehyd-Fänger dienen. Dementsprechend können bis zu ca. 50 Gew.% Harnstoff, bezogen auf die Gesamtmenge des Harnstoffs, vor, während oder nach der Kondensationsreaktion in Substanz oder als wäßrige Lösung zugesetzt werden.

Das erfindungsgemäße Verfahren wird zweckmäßig so durchgeführt, daß man die genannten Ausgangsprodukte bei einer Temperatur von 10 bis 60°C, vorzugsweise 20 bis 40°C zusammengibt, durch Zusatz eines basischen Katalysators ein schwach basisches Milieu, d.h. einen pH-Bereich von ca. 9 bis 9,5 einstellt, bis zur jeweils gewünschten Kondensationstemperatur erwärmt und unter diesen Bedingungen kondensiert, bis aus einer dem Reaktionsgemisch entnommenen Probe bei 20°C duch Zusetzen der fünffachen Menge Wasser Harz ausgefällt werden kann. Dann wird, gegebenenfalls nach Zugabe der Restmenge an Harnstoff, die Kondensationsreaktion durch Abkühlen des Reaktionsgemisches abgebrochen und die erhaltene Lösung durch Zusatz von weiteren basischen Stoffen (üblicherweise wäßrige Alkalihydroxidlösung) auf einen für die Lagerung günstigen höheren ph-Bereich von 9,5 bis 10 eingestellt.

Als Katalysator dienen hauptsächlich solche basische Verbindungen, die sich gegenüber Formaldehyd indifferent verhalten. Das sind beispielsweise Alkali- und Erdalkalihydroxide in Form ihrer wäßrigen Lösungen sowie tertiäre Amine, wie Triethylamin, Tributylamin oder tertiäre Alkanolamine, z.B. Triethanolamin, Methyldiethanolamin, Dimethylethanolamin oder Diethylethanolamin. Es lassen sich aber auch primäre und sekundäre Amine verwenden.

Die Kondensationstemperatur ist im allgemeinen identisch mit der Siedetemperatur des Reaktionsgemisches (ca. 100°C). Außer bei Siedetemperatur kann die Kondensation jedoch auch bei tieferen Temperaturen (75 bis 95°C) oder gegebenenfalls in druckfesten Apparaten bei einer Temperatur oberhalb von 100°C vorgenommen werden.

Das erfindungsgemäße Verfahren wird üblicherweise so durchgeführt, daß der Trockengehalt der Aminoplastkondensat-Lösung etwa 60 bis 70 Gew.%, bezogen auf die wäßrige Lösung, beträgt. Je nach Einsatzgebiet der resultierenden Harzlösungen lassen sich mittels des neuen Verfahrens aber auch Lösungen mit niedrigeren oder höheren Kondensatanteilen herstellen.

Die nach dem erfindungsgemäßen Verfahren hergestellten Kondensationsprodukte weisen eine ausgezeichnete Lagerstabilität auf. Sie beträgt im allgemeinen 3 bis 6 Monate (bei 20°C). Es zeigt sich, daß die Lagerbarkeit der erfindungsgemäß hergestellten Produkte, insbesondere bei niederen Temperaturen erheblich günstiger ist als diejenige von Kondensaten, die nach Methoden des Standes der Technik bereitet wurden. Dadurch ergeben sich gerade im Winter erhebliche Vorteile, da bei den nach dem erfindungsgemäßen Verfahren hergestellten Aminoplastharzlösungen bei Transport und Lagerung die üblicherweise erforderlichen Anwärm-und Isoliermaßnahmen weitgehend entfallen können.

Die Viskosität der nach dem neuen Verfahren erhaltenen wäßrigen Lösungen der Harnstoff-Formaldehyd-Kondensationsprodukte ist besonders niedrig (im allgemeinen bei 200 bis 300 mPa·s, bei einem Trockengehalt von 65 Gew.% (2 Stdn./120°C)), so daß diese Lösungen auch in höher konzentrierter Form leicht handhabbar sind. Sie können beispielsweise mittels einfacher Pumpen auch noch durch Rohrleitungen mit geringer Nennweite gefördert werden.

Das erfindungsgemäße Verfahren bietet erhebliche Vorteile.

Während nach den bisher bekannten Verfahren durch Abmischen von Harnstoff-Formaldehyd- und Melamin-Formaldehyd-Harzen eine entsprechend lagerstabile Harnstoff-Formaldehyd-Komponente nur in mehreren Verfahrensstufen zu erhalten ist, nämlich durch zunächst basische und darauffolgende saure Kondensation, die bis zu einem hohen Kondensationsgrad fortgeführt werden muß, wird im vorliegenden Verfahren die Kondensation in einem einzigen Verfahrensschritt durchgeführt. Dabei lassen sich je nach dem gewünschten Anwendungszweck mehr oder weniger stark kondensierte Produkte ohne Einbuße an Lagerstabilität gleichermaßen gewinnen.

Bei der bisherigen Herstellung der als Abmischkomponenten verwendeten Melamin-Formaldehyd-Kondensate werden stabile Produkte nur durch Einhaltung eines sehr eng begrenzten pH-Bereichs während der Kondensation erhalten. Ebenso müssen dabei die Reaktionstemperatur und die Reaktionsdauer sehr genau eingehalten werden, was aufwendige Steuer- und Regeleinrichtungen erfordert. Dagegen ist im neuen Verfahren ein wesentlich geringerer Aufwand für Überwachung und Steuerung erforderlich.

Ein Vorzug des neuen Verfahrens ist auch die sehr hohe Geschwindigkeit der Kondensationsreaktion. So beträgt beispielsweise die Kondensationsdauer bei der Herstellung einer 65 gew.%igen Harnstoff-Melamin-Formaldehyd-Leimharzlösung, die 19 bis 24 Gew.% Melamin, bezogen auf die Lösung, enthält und damit zur Herstellung von Spanplatten der Emissionsklassen E2 bis E1 und der Güteklasse V100 geeignet ist, bei Siedehitze nur 15 bis 25 Minuten. Demgegenüber liegt in den bisher bekannten Verfahren die Umsetzungsdauer für die Harnstoff-Formaldehyd-Komponente bei ca. 30 Minuten und für die Melamin-Formaldehyd-Komponente bei ca. 120 Minuten ohne Einrechnung der jeweiligen Aufheiz- und Abkühlphasen sowie ohne Berücksichtigung des zusätzlichen Zeitaufwands für den nachträglichen Abmischvorgang.

Das erfindungsgemäße Verfahren kann in diskontinuierlicher Arbeitsweise in drucklos zu betreibenden Rührbehältern vorgenommen werden, wobei diese, da im Gegensatz zur Herstellung sonstiger Harnstoffharze im vorliegenden Fall zu keinem Zeitpunkt eine saure Kondensation erfolgt, sogar aus einfachen Werkstoffen, wie Aluminium gefertigt sein können und keine besonders säure- oder korrosionsbeständigen Werkstoffe benötigen.

Aufgrund seiner kurzen Kondensationszeiten eignet sich das neue Verfahren jedoch auch vorzüglich für die Durchführung in kontinuierlicher Arbeitsweise, z.B. in Röhrenreaktoren oder in einer Rührkesselkaskade.

Ein weiterer, wesentlicher Vorteil des Verfahrens besteht darin, daß es möglich ist, auch hochkonzentrierte Aminoplastharzlösungen, wie sie speziell für die Holzwerkstoff- und Prozeßmassenherstellung benötigt werden, ohne nachfolgende oder zwischengeschaltete Eindampfvorgänge unmittelbar in der erforderlichen Konzentration zu gewinnen. Hierdurch können in erheblichem Maße Energiekosten eingespart, Produktverluste und Belastungen der Umwelt oder aber Aufwendungen für die Schadstoffbeseitigung im Brüden und in der Abluft vermieden werden.

Mittels des erfindungsgemäßen Verfahrens können wäßrige Lösungen von Harnstoff-Melamin-Formaldehyd-Kondensationsprodukten für alle derzeit gebräuchlichen Einsatzgebiete vorteilhaft hergestellt werden.

Insbesondere sind dies: die üblicherweise schwach modifizierten oder unmodifizierten Tränkharzlösungen, die sich zum Tränken papierhaltiger Trägerstoffe eignen, die nach ihrer Trocknung bei der Herstellung von Schichtpreßstoffplatten im Hochdruckverfahren mitverwendet werden;

die üblicherweise stärker modifizierten Tränkharzlösungen, die sich zum Tränken papierhaltiger Trägerstoffe eignen, die nach ihrer Trocknung für die Oberflächenbeschichtung von Holz- und Holzwerkstoffen im Niederdruck- oder Kurztaktverfahren dienen werden;

Kondensationsprodukte, die als Holzleime oder Bestandteile von Holzleimen eingesetzt werden, um wetterfeste, feuchtigkeits- und kochbeständige Holzwerkstoffe vorzugsweise Spanplatten herzustellen;

Kondensationsprodukte, die zur Imprägnierung von Zellstoffen und anderen Füllmitteln (z.B. Cellulosemehl oder Holzmehl) für die Herstellung von duroplastischen Preßmassen benötigt werden;

Kondensationsprodukte, die sehr niedrig kondensiert und durch löslich machende Zusätze, wie Natriumsulfit oder Amidosulfonsäure wasserverdünnbar eingestellt worden sind, als Bindemittel für die Herstellung von Matten und Vliesen aus Steinwolle und Glasfasern.

Bei den nach dem Verfahren hergestellten Kondensatlösungen ist der ungebunden vorliegende Formaldeyhd, verglichen mit herkömmlich bereiteten Produkten, um bis zu 30 % geringer. Dementsprechend können ohne Beeinträchtigung der technologischen Eigenschaften, d.h. bei gleichbleibendem Gehalt an Gesamtformaldehyd Endprodukte (z.B. Spanplatten) hergestellt werden, die eine bis zu 30 % geringere nachträgliche Abspaltung von Formaldehyd (Perforator-Methode gemäß DIN EN 120) in die Umgebung aufweisen. Holzwerkstoffe, die wenig Formaldehyd abgeben, insbesondere entsprechende Spanplatten haben gerade im Innenausbau eine besondere Bedeutung.

Die Herstellung von Spanplatten mit geringer Formaldehydemission ist nach den herkömmlichen Verfahren nur durch Verminderung des Gesamtformaldehydgehalts bzw. Senkung des Molverhältnisses von Formaldehyd:(Harnstoff + Melamin) möglich. Dies führt aber zu einer Verschlechterung der technologischen Werte. So erhält man auf die Weise Harze mit geringer oder sogar verschwindender Lagerfähigkeit. Auch die Werte für die Wasserfestigkeit und die Quellung von solchermaßen hergestellten Spanplatten sind deutlich schlechter. Diese Einbußen müssen dann durch finanzielle Mehraufwendungen, wie höheren Leimauftrag oder höheren Melamingehalt ausgeglichen werden.

Der oben beschriebene Vorteil der geringeren Formaldehydabspaltung tritt aber nicht nur an dem fertigen Endprodukt in Erscheinung, sondern wirkt sich auch bereits bei der Herstellung dieser Produkte aus. So kann beispielsweise bei der Verpressung von Holzwerkstoffen mittels der nach dem erfindungsgemäßen Verfahren hergestellten Bindemittel die Emission von Formaldehyd in den Betrieben der holzverarbeitenden Industrie bereits spürbar gesenkt werden.

Die nachfolgenden Beispiele sollen die Erfindung näher erläutern. Die dort angegebenen Teile und Prozente sind Gewichtsteile und Gewichtsprozente.

Beispiel 1 (Vergleichsbeispiel)

Leimharz für die Spanplattenherstellung

A) Harnstoff-Formaldehyd-Vorkondensat

60 Teile Harnstoff wurden mit 157,5 Teilen 40 %iger wäßriger Formaldehydlösung vermischt und diese Lösung durch Zusatz von Natronlauge auf einen pH-Wert von 7 bis 7,5 eingestellt. Die Reaktionsmischung wurde innerhalb von 40 bis 40 Minuten auf 95°C erhitzt und bei dieser Temperatur weitere 15 Minuten gerührt.

Danach wurde die Reaktionslösung durch Zufügen wäßriger Ameisensäure auf einen pH-Wert von 4,7 bis 4,8 eingestellt und unter Beibehaltung einer Temperatur von 95°C solange kondensiert, bis eine gezogene Probe nach Zusatz der fünffachen Menge warmen Wassers nach Abkühlen auf 30°C eine Trübung aufwies.

Danach wurde die Reaktionslösung durch Zugabe wäßriger Natronlauge neutralisiert, rasch gekühlt und nach Abfall der Temperatur auf unter 70°C mit weiteren 18 Teilen Harnstoff versetzt.

Die Umsetzungsdauer betrug nach Erreichen einer Temperatur von 95°C ca. 45 Minuten.

Das so erhaltene Reaktionsprodukt wurde durch Abdampfen von 52,6 Teilen Wasser auf einen Trockengehalt von 65 % (bestimmbar durch zweistündiges Tempern bei 120°C, DIN 12605) aufkonzentriert. Die danach erhaltene Menge betrug 183 Teile.

B) Melamin-Formaldehyd-Vorkondensat

Eine Mischung von 127 Teilen Melamin und 150 Teilen 40 %iger wäßriger Formaldehydlösung wurde durch Zusatz von Natronlauge auf einen pH-Wert von ca. 9 eingestellt, innerhalb einer Zeit von 30 bis 45 Minuten bis zum Sieden erhitzt und unter Aufrechterhaltung eines pH-Werts von 8,6 bis 8,8 durch Zusatz weiterer Natronlauge so lange in der Siedehitze gerührt, bis eine gezogene Probe nach Zusatz der doppelten Menge warmen Wassers bei Abkühlung auf 20°C eine Trübung ergab.

Durch rasches Abkühlen bis auf Raumtemperatur wurde die Reaktion gestoppt und das erhaltene Reaktionsprodukt (277 Teile), welches einen Trockengehalt von ca. 65 % (2 h/120°C) besaß, zum Zwecke der Stabilisierung durch Zufügen weiterer Natronlauge auf einen pH-Wert von 10 eingestellt.

Die Umsetzungszeit nach Erreichen der Siedetemperatur hatte ca. 120 Minuten betragen.

C) Harnstoff-Melamin-Formaldehyd-Leimharz

Durch Vermischen von 141 Teilen Harnstoff-Formaldehyd-Harzlösung und 100 Teilen Melamin-Formaldehyd-Harzlösung, deren Herstellung unter A und B beschrieben ist, und Einstellen eines pH-Werts von 9,5 bis 10, wurden 241 Teile einer Melamin-Harnstoff-Formaldehyd-Leimharzmischung erhalten, welche einen Gehalt von 19 % Melamin und 25 % Harnstoff sowie einen Trockengehalt von ca. 65 % (2 h/120°C) aufwies. Der Anteil an nicht umgesetztem, freien Formaldehyd betrug 0,3 % (bestimmbar nach der Methode von De Jong).

Die Viskosität (gem. bei 20°C) lag bei 500 mPa·s, die Lagerbarkeit betrug ca. 8 Wochen bei 20°C, 4 Wochen bei 30°C und 3 Wochen bei -3°C.

Das Produkt ist für die Herstellung kochfester Spanplatten geeignet, welche den Anforderungen der DIN 68763 (V 100) genügen.

Beispiel 2

Leimharz für die Spanlattenherstellung

Eine Mischung aus 371 Teilen einer konzentrierten wäßrigen Lösung von Formaldehyd und Harnstoff, die 50 % Formaldehyd und 25 % Harnstoff enthielt, 127 Teilen Melamin und 76 Teilen Wasser wurde durch Zufügen von Natronlauge auf einen pH von ca. 9,3 eingestellt und unter Rühren zum Sieden erhitzt.

Unter Beibehaltung der Temperatur und eines pH-Werts von 8,5 bis 9 durch Zusatz weiterer Natronlauge wurde das Reaktionsgemisch solange gerührt, bis eine gezogene Probe nach Zusatz der fünffachen Menge warmen Wassers beim Abkühlen auf 20°C eine Trübung aufwies.

Nach Zusatz von 94 Teilen Harnstoff wurde das Reaktionsgemisch rasch gekühlt und nach Erreichen von Raumtemperatur der pH-Wert der Harzlösung auf 9,5 bis 10 eingestellt.

5

Das erhaltene Reaktionsprodukt (668 Teile) wies einen Anteil von 19 % Melamin sowie 25 % Harnstoff und einen Trockengehalt (2 h/120°C) von ca. 65 % auf. Der Anteil an nicht umgesetztem, freien Formaldehyd betrug 0,19 %.

Die Viskosität (gem. bei 20°C) lag bei 200 mPa·s, die Lagerbarkeit betrug ca. 16 Wochen bei 20°C, 4 Wochen bei 30°C und 8 Wochen bei -3°C.

Die Kondensationszeit nach Erreichen der Siedetemperatur hatte 20 min betragen.

Das erhaltene Produkt läßt sich zur Herstellung kochbeständiger Spanplatten nach DIN 68763 (V 100) verwenden.

Beispiel 3

Leimharz für die Spanlattenherstellung

Eine Mischung aus 259 Teilen einer konzentrierten wäßrigen Lösung von Formaldehyd und Harnstoff, die 50 % Formaldehyd und 25 % Harnstoff enthielt, 139 Teilen einer 40 %igen wäßrigen Formaldehyd-Lösung, 127 Teilen Melamin und 20 Teilen Wasser wurde durch Zusatz wäßriger Natronlauge auf einen pH von ca. 9 eingestellt, unter Rühren innerhalb von 30 bis 40 Minuten bis zur Siedehitze erwärmt und bei dieser Temperatur unter Konstanthaltung eines pH-Werts von 8,5 bis 9 durch Zusatz weiterer Natronlauge solange kondensiert, bis eine Probe bei Zusatz der fünffachen Menge warmen Wassers nach Abkühlen auf 20°C eine Trübung aufwies.

Durch Abkühlen wurde die Reaktion gestoppt, und nach Erreichen einer Temperatur von unter 70°C wurden der Reaktionslösung 122 Teile Harnstoff zugegeben, und nach Abkühlen auf Raumtemperatur wurde das Reaktionsgemisch auf einen pH-Wert von 9,5 bis 10 eingestellt.

Das erhaltene Produkt (667 Teile) wies einen Gehalt von 19 % Melamin, 25 % Harnstoff und einen Trockengehalt (2 h/120°C) von ca. 65 % auf. Der Gehalt an nicht umgesetztem, freien Formaldehyd betrug 0,22 %.

Die Viskosität (gem. bei 20°C) lag bei 250 mPa·s, die Lagerbarkeit der fertigen Leimharz-Lösung betrug bei 20°C ca. 12 Wochen, bei 30°C ca. 4 Wochen und bei -3°C ca. 3 Wochen.

Die Kondensationszeit nach Erreichen der Siedetemperatur hatte ca. 35 min betragen.

Das erhaltene Produkt eignet sich zur Herstellung von kochfesten Spanplatten nach DIN 68763 (V 100)

Beispiel 4 (Vergleichsbeispiel)

Leimharz für die Spanplattenherstellung

Eine Mischung aus 127 Teilen Melamin, 150 Teilen 40 %iger wäßriger Formaldehydlösung und 263 Teilen eines Harnstoff-Formaldehyd-Vorkondensats, dessen Herstellung in Beispiel 1, Absatz A) beschrieben ist, wurde durch Zusatz wäßriger Natronlauge auf einen pH-Wert von 9 eingestellt, unter Rühren innerhalb von 30 bis 40 Minuten bis zur Siedehitze erwärmt und bei dieser Temperatur unter Konstanthaltung eines pH-Werts von ca. 9 durch Zusatz weiterer Natonlauge solange kondensiert, bis eine gezogene Probe bei Zusatz der fünffachen Menge warmen Wassers nach Abkühlen auf 50°C eine Trübung aufwies.

Durch Abkühlen wurde die Reaktion gestoppt, und nach Erreichen einer Temperatur von unter 70°C wurden der Reaktionslösung 38 Teile Harnstoff zugegeben, und nach Abkühlen auf Raumtemperatur wurde das Reaktionsgemisch auf einen pH-Wert von 9,5 bis 10 eingestellt.

Das erhaltene Produkt (578 Teile) wies einen Gehalt von 22 % Melamin sowie 25 % Harnstoff und einen Trockengehalt (2 h/120°C) von ca. 65 % auf. Der Anteil an nicht umgesetztem, freien Formaldehyd betrug 0,25 %.

Die Viskosität (gem. bei 20°C) lag bei 600 mPa·s, die Lagerbarkeit der fertigen MUF-Leimharzlösung betrug bei 20°C ca. 8 Wochen bei 30°C ca. 4 Wochen und bei -3°C ca. 3 Wochen.

Die Kondensationszeit der hier beschriebenen 2. Stufe hatte nach Erreichen der Siedetemperatur ca. 30 min betragen.

Das erhaltene Produkt läßt sich zur Herstellung kochbeständiger Spanplatten nach DIN 68763 (V 100) verwenden, welche der Emissionsklasse E 2 der ETB-Richtlinie "Richtlinie über die Klassifizierung von Spanplatten bezüglich der Formaldehydabgabe" entsprechen.

Beispiel 5

Leimharz für die Spanplattenherstellung

Eine Mischung aus 302 Teilen einer konzentrierten wäßrigen Lösung von Formaldehyd und Harnstoff, die 50 % Formaldehyd und 25 % Harnstoff enthielt, 127 Teilen Melamin un 71 Teilen Wasser wurde durch Zufügen von Natronlauge auf einen pH-Wert von ca. 9,4 eingestellt und unter Rühren zum Sieden erhitzt.

Unter Beibehaltung eines pH-Werts von 8,5 bis 9 durch Zusatz weiterer Natronlauge wurde das Reaktionsgemisch in der Siedehitze solange gerührt, bis eine gezogene Probe nach Zusatz der fünffachen Menge warmen Wassers beim Abkühlen auf 20 bis 15°C eine Trübung aufwies.

Durch Abkühlen wurde die Reaktion gestoppt, wobei dem Reaktionsgemisch nach Erreichen einer Temperatur von unter 70°C eine Menge von 75 Teilen Harnstoff zugesetzt und nach Erreichen einer Temperatur von unter 30°C der pH-Wert der Harzlösung auf 9,5 bis 10 eingestellt.

Das erhaltene Produkt (575 Teile) wies einen Anteil von 22 % Melamin sowie 25 % Harnstoff und einen Trockengehalt (2 h/120°C) von ca. 65 % auf. Der Anteil an nicht umgesetztem, freien Fromaldehyd betrug 0,17 %.

Die Viskosität (gem. bei 20°C) lag bei 250 mPa·s, die Lagerbarkeit betrug ca. 8 Wochen bei 20°C, 4 Wochen bei 30°C und eine Woche bei -3°C.

Die Kondensationszeit nach Erreichen der Siedetemperatur hatte ca. 20 min betragen.

Das erhaltene Produkt läßt sich zur Herstellung kochbeständiger Spanplatten nach DIN 68763 (V 100) verwenden, welche der Emissionsklasse E 2 der ETB-Richtlinie "Richtlinie über die Klassifizierung von Spanplatten bezüglich der Formaldehydabgabe" entsprechen.

Beispiel 6

Harnstoff-Melamin-Formaldehyd-Tränkharz

Eine Mischung aus 56,4 Teilen einer konzentrierten wäßrigen Lösung von Formaldehyd und Harnstoff, die 50 % Formaldehyd und 25 % Harnstoff enthielt, 68,5 Teilen einer 40 %igen wäßrigen Formaldehydlösung, 127 Teilen Melamin und 89,76 Teilen Wasser wurde durch Zufügen von Natronlauge auf einen pH-Wert von ca. 9 eingestellt und unter Rühren zum Sieden erhitzt.

Unter Beibehaltung eines pH-Werts von 8,5 bis 9 durch Zusatz weiterer Natronlauge wurde das Reaktionsgemisch solange in der Siedehitze gerührt, bis eine gezogene Probe nach Zusatz der fünffachen Menge warmen Wassers beim Abkühlen auf 60°C eine Trübung aufwies.

Durch Abkühlen wurde die Reaktion gestoppt, und danach der pH-Wert der Tränkharzlösung auf 9,5 bis 10 eingestellt.

Das erhaltene Reaktionsprodukt (341,6 Teile) wies einen Anteil von 37 % Melamin sowie 4,1 % Harnstoff und einen Trockengehalt (2 h/120°C) von ca. 55 % auf.

Die Kondensationszeit nach Erreichen der Siedetemperatur hatte ca. 55 Minuten betragen.

Die Viskosität (gem. bei 20°C) lag bei 60 mPa·s, die Lagerbarkeit betrug ca. 4 Wochen bei 20°C.

Die so erhaltene Tränkharzlösung ist nach Zusatz üblicher Härter, Netzmittel und dergleichen zur Imprägnierung von Dekorpapieren geeignet, die im Niederdruck- oder Kurztaktverfahren zur Oberflächenvergütung von Holzwerkstoffen, wie Spanplatten verwendet werden.

Beispiel 7

Harnstoff-Melamin-Formaldehyd-Harz zur Preßmasseherstellung

Eine Mischung aus 128 Teilen einer konzentrierten wäßrigen Lösung von Formaldehyd und Harnstoff, die 50 % Formaldehyd und 25 % Harnstoff enthielt, 29 Teilen 40 %iger wäßriger Formaldehydlösung, 127 Teilen Melamin und 39 Teilen Wasser wurde durch Zufügen von Natronlauge auf einen pH-Wert von ca. 9,3 eingestellt und unter Rühren zum Sieden erhitzt.

Unter Beibehaltung eines pH-Werts von 8,5 bis 9, durch Zusatz weiterer Natronlauge wurde das Reaktionsgemisch solange gerührt, bis eine gezogene Probe nach Zusatz der fünffachen Menge warmen Wassers beim Abkühlen auf 50°C eine Trübung aufwies.

Durch Abkühlen wurde die Reaktion gestoppt und danach (bei Raumtemperatur) der pH-Wert der Harzlösung auf 9,5 bis 10 eingestellt.

Das erhaltene Reaktionsprodukt (323 Teile) wies einen Anteil von 39 % Melamin sowie 10 % Harnstoff und einen Trockengehalt (2 h/120°C) von ca. 67 % auf. Die Viskosität (gemäß bei 20°C) lag bei 1300 mPa·s, die Lagerbarkeit betrug ca. 8 Wochen bei 20°C.

Die Kondensationszeit nach Erreichen der Siedetemperatur hatte ca. 35 min betragen.

Die so erhaltene wäßrige Kunstharzlösung kann mit gebleichtem Zellstoff im Verhältnis von 100 Teilen Lösung zu 30 Teilen Zellstoff und den üblichen Zusätzen, wie z.B. Härtern und Gleitmitteln, im Kneter vermischt, darauf bis zu einem Wassergehalt von 5 % getrocknet und nach Mahlen zu einer hitzehärtbaren Preßmasse verdichtet werden.

Beispiel 8

Anwendungstechnische Prüfung

Je 1000 Teile Leimharzlösung, deren Herstellung in den Beispielen 1, 2, 4 und 5 beschrieben ist, wurden in üblicher Weise mit 20 Teilen Wasser, 65 Teilen einer 50 %igen Paraffinemulsion und 100 Teilen ei-

EP 0 185 205 B1

ner Härterlösung, welche 20 % Ammoniumchlorid und 80 % Wasser enthielt, zu einer Leimharzflotte umgesetzt.

Damit wurden Standardfichtenholzspäne so beleimt, daß sich ein Festharzgehalt von 12 % und eine Feuchte von 11 bis +0,5 % jeweils bezogen auf absolut trockene Späne, ergaben. Bei 180°C und 220 Sekunden Preßzeit wurden 18,5 mm starke Spanplatten hergestellt.

Es wurden die Quellung nach 2 und 24 Stunden, die Wasseraufnahme, der Gehalt an freiem Formaldehyd (nach De Jong) und die Formaldehydabspaltung nach der FESYP-Perforatormethode bestimmt. Die Prüfung hatte folgende Ergebnisse.

| Prüfung / Eigenschaft | Prüfkörper gemäß Beispiel | | | |
|---|---|---|---|---|
| | 1 | 2 | 4 | 5 |
| | (Vergleich) | | (Vergleich) | |
| Quellung nach 2 h % | 2,0 | 1,5 | 2,0 | 1,7 |
| nach 24 h % | 7,2 | 6,2 | 7,3 | 6,4 |
| Wasseraufnahme nach 24 h % | 30 | 26 | 30 | 26 |
| Freier Formaldehyd % | 0,30 | 0,19 | 0,23 | 0,17 |
| Formaldehydabgabe mg HCHO/100 g absolut trockene Platte nach DIN EN 120 | 50 | 32 | 24 | 22 |

## Patentansprüche

1. Verfahren zur Herstellung von wäßrigen Lösungen von Harnstoff-Melamin-Formaldehyd-Kondensationsprodukten durch Kondensation von Harnstoff, Melamin und Formaldehyd, gegebenenfalls unter Zusatz von Modifizierungsmitteln, dadurch gekennzeichnet, daß man die Kondensation unter schwach basischen Bedingungen in einer Stufe vornimmt und dabei die erforderliche Menge an Formaldehyd entweder teilweise oder vollständig in Form einer konzentrierten wäßrigen Lösung von Formaldehyd und Harnstoff in die Reaktion einbringt.

2. Verfahren gemäß Anspruch 1, dadurch gekennzeichnet, daß man die erforderliche Menge an Formaldehyd vollständig in Form einer konzentrierten wäßrigen Lösung von Formaldehyd und Harnstoff in die Reaktion einbringt.

3. Verwendung der gemäß Anspruch 1 erhältlichen wäßrigen Lösungen von Harnstoff-Melamin-Formaldehyd-Kondensationsprodukten als Leimharz oder Bestandteil von Leimharzen zur Herstellung von Holzwerkstoffen.

4. Verwendung der gemäß Anspruch 1 erhältlichen wäßrigen Lösungen von Harnstoff-Melamin-Formaldehyd-Kondensationsprodukten als Tränkharz zur Tränkung papierhaltiger Trägerstoffe.

5. Verwendung der gemäß Anspruch 1 erhältlichen wäßrigen Lösungen von Harnstoff-Melamin-Formaldehyd-Kondensationsprodukten zur Imprägnierung von Zellstoffen oder anderer Füllmittel für die Preßmassenherstellung.

6. Verwendung der gemäß Anspruch 1 erhältlichen wäßrigen Lösungen von Harnstoff-Melamin-Formaldehyd-Kondensationsprodukten als Bindemittel für die Herstellung von Matten und Vliesen aus Steinwolle und Glasfasern.

## Claims

1. A process for preparing an aqueous solution of a urea-melamine-formaldehyde condensation product by condensation of urea, melamine and formaldehyde in the presence or absence of a modifier, which comprises performing the condensation under weakly basic conditions in a single stage by introducing the amount of formaldehyde required into the reaction either partly or wholly in the form of a concentrated aqueous solution of formaldehyde and urea.

2. A process as claimed in claim 1, wherein the amount of formaldehyde required is wholly introduced into the reaction in the form of a concentrated aqueous solution of formaledhyde and urea.

3. The use of an aqueous solution of a ureamelamine-formaldehyde condensation product obtainable as claimed in claim 1, as a glue resin, or as a constituent of a glue resin, for manufacturing wood materials.

4. The use of an aqueous solution of a ureamelamine-formaldehyde condensation product obtainable as claimed in claim 1, as an impregnating resin for impregnating paper-containing substrate materials.

8

5. The use of an aqueous solution of a ureamelamine-formaldehyde condensation product obtainable as claimed in claim 1, for impregnating pulps or other fillers for compression molding.

6. The use of an aqueous solution of a ureamelamine-formaldehyde condensation product obtainable as claimed in claim 1, as a binder for manufacturing mats and webs from rockwool and glass fibers.

## Revendications

1. Procédé de preparation de solutions aqueuses de produits de condensation urée-mélamine-formaldéhyde par condensation d'urée, de mélamine et de formaldéhyde, éventuellement avec addition d'agents modificateurs, caractérisé en ce qu'on effectue la condensation en une étape dans des conditions faiblement basiques, en introduisant dans la réaction la quantité nécessaire de formaldéhyde soit partiellement soit en totalité sous forme d'une solution aqueuse concentrée de formaldéhyde et d'urée.

2. Procédé selon la revendication 1, caractérisé en ce qu'on introduit dans la réaction la quantité nécessaire de formaldéhyde en totalité sous forme d'une solution aqueuse concentrée de formaldéhyde et d'urée.

3. Utilisation de solutions aqueuses de produits de condensation urée-mélamine-formaldéhyde préparées selon le procédé de la revendication 1, comme résine de collage ou comme composant de résines de collage pour la préparation de matériaux dérivés du bois.

4. Utilisation de solutions aqueuses de produits de condensation urée-mélamine-formaldéhyde préparées selon le procédé de la revendication 1, comme résine d'imprégnation pour l'imprégnation de supports contenant du papier.

5. Utilisation de solutions aqueuses de produits de condensation urée-mélamine-formaldéhyde préparées selon le procédé de la revendication 1, pour l'imprégnation de produits cellulosiques ou d'autres charges pour la préparation de matières à mouler.

6. Utilisation de solutions aqueuses de produits de condensation urée-mélamine-formaldéhyde préparées selon le procédé de la revendication 1, comme liant pour la préparation de nappes et de non-tissés de laine minérale ou de fibres de verre.